# EUROPEAN PATENT SPECIFICATION

(11) **EP 3 370 281 B1**
(45) Date of publication and mention of the grant of the patent: **16.04.2025**
(21) Application number: 17849050.4
(22) Date of filing: 05.09.2017
(51) Int. Cl.: H01M 4/13, H01M 4/74, H01M 4/139, H01M 4/04, H01M 10/0525, H01M 4/66, H01M 4/80, H01M 4/02

(54) **ELECTRODE INCLUDING ELECTRODE CURRENT COLLECTOR WITH THREE-DIMENSIONAL NETWORK STRUCTURE**
ELEKTRODE MIT ELEKTRODENSTROMKOLLEKTOR EINER DREIDIMENSIONALEN NETZWERKSTRUKTUR
ÉLECTRODE COMPRENANT UN COLLECTEUR DE COURANT D'ÉLECTRODE DE STRUCTURE DE RÉSEAU TRIDIMENSIONNEL

(30) Priority: 09.09.2016 KR 20160116187; 04.09.2017 KR 20170112505
(43) Date of publication of application: 05.09.2018
(73) Proprietor: LG Energy Solution, Ltd., Seoul 07335 (KR)
(72) Inventor: MOK, Eun Kyung, Daejeon 35264 (KR); YOU, Min Kyu, Daejeon 34186 (KR); UHM, In Sung, Daejeon 34112 (KR)
(74) Representative: Plasseraud IP
(86) International application number: PCT/KR2017/009672
(87) International publication number: WO 2018/048166

(56) References cited:
- WO-A1-2012/111613
- KR-A- 20110 128 433
- KR-A- 20110 128 433
- KR-A- 20120 111 508
- KR-A- 20120 111 508
- KR-A- 20130 125 049
- KR-A- 20150 140 619
- KR-A- 20160 062 617
- US-A1- 2003 068 554
- US-A1- 2011 151 329
- US-A1- 2013 302 670
- US-A1- 2014 306 665

## Description

### Technical Field

The present disclosure relates to an electrode including a current collector with a three-dimensional network structure.

### Background Art

As the technical development of and the demand for mobile devices have increased, the demand for secondary batteries as an energy source has rapidly increased. Among the secondary batteries, lithium secondary batteries, which have high energy density, high operating voltage, a long cycle lifespan, and a low self-discharge rate, have been commercially available and widely used.

Further, in line with growing concerns about environmental issues, research into electric vehicles (EVs), hybrid electric vehicles (HEVs), which are able to replace vehicles using a fossil fuel such as gasoline vehicles, diesel vehicles, and the like, has been actively conducted. The fossil fuel is one of the major causes of air pollution. As a power source for the EVs and the HEVs, interest in research using lithium secondary batteries, which have high energy density and discharge voltage, and practical application thereof is increasing.

Further, according to development trends of multifunctional miniaturized wearable devices and portable devices, a need for miniaturization and thinning of a secondary battery itself is increasing. In addition, in order to enable the wearable devices and portable devices to be used for a long time, efforts to increase a capacity of the secondary battery have been made in various ways.

A conventional electrode is prepared by applying a slurry in which an electrode active material, a binder and a conductive material are appropriately mixed, on positive and negative electrode current collectors, followed by a heat treatment process. That is, the conventional electrode has a structure in which an electrode mixture layer containing the binder and the conductive material is formed on the positive and negative electrode current collectors.

In this structure, when a thickness of the electrode mixture layer is increased to increase a capacity of a battery, electrons generated in an upper portion of an active material do not rapidly move to a current collector as a distance between the current collector and the upper portion of the active material is increased, and also, a movement speed of lithium ions generated in an electrode is limited as moving paths thereof become longer, and thus resistance in an entire electrode is greatly increased. In addition, since an increase in the thickness of the electrode mixture layer may reduce an impregnation rate of an electrolyte with respect to an active material layer, a problem in which the resistance of the electrode is increased may become bigger.

In addition, since the binder contained in the electrode mixture layer is relatively light, the binder may not be uniformly dispersed in the electrode mixture layer, and thus the binder may be separated from a surface of the electrode mixture layer. In particular, the thicker the electrode mixture layer, the greater a separation of the binder from the electrode material mixture layer, so that it is impossible to avoid deterioration of cycle characteristics and the lifespan of the battery due to a separation of the active material and the current collector, wherein the separation is caused by a volume change that occurs during a charging and discharging process of the battery.

In order to solve these problems, conventionally, a technique in which an electrode mixture layer prepared by varying porosity, a type of an electrode active material, or the like is applied in multiple layers has been developed. However, even in this structure, an amount of loading is limited, desired electronic conductivity and ion conductivity cannot be obtained, there is a functional problem in which electrode strength is decreased due to an increase in a thickness of an electrode mixture layer, and limitations on miniaturization and thinning of a battery which are required in the future cannot be overcome.

Therefore, in order to prepare a high loading electrode having an improved energy density, there is a high need for a technique for an electrode having a novel structure capable of solving the above problems.

WO2012/111613 and US2003/0068554 disclose a porous structure of the electrode.

### Disclosure

### Technical Problem

The present disclosure is provided to solve the above-described problems of the related art and technical problems which have been identified in the past.

The inventors of the present application have conducted intense research and various experiments and have confirmed that , as will be described below, when an electrode for a secondary battery consisting of unit electrodes having a structure in which an electrode mixture containing an electrode active material is introduced into pores of a unit current collector with a three-dimensional network structure is used, resistance inside the electrode is small even when a loading amount of the electrode mixture is increased, and separation of an electrode mixture layer may be prevented, thereby completing the present disclosure.

### Technical Solution

The present invention provides an electrode as disclosed in the appended set of claims for a secondary battery in which two or more unit electrodes are laminated in a state of being in close contact with each other, and mutually adjacent unit electrodes are electrically connected through an electrode mixture, wherein in each of the unit electrodes, the electrode mixture containing an electrode active material is introduced into pores of a unit current collector with a three-dimensional network structure.

According to an exemplary embodiment of the present disclosure, the electrode may have a structure in which 2 to 10 unit electrodes are laminated.

According to the present invention, the unit current collector with a three-dimensional network structure is conductive metal felt.

According to the present invention, an average thickness of the unit current collector with a three-dimensional network structure is in a range of 30 µm to 400 µm.

According to the present invention, an average diameter of pores in the unit current collector with a three-dimensional network structure is in a range of 1 µm to 100 µm.

According to an exemplary embodiment of the present disclosure, a unit current collector with a three-dimensional network structure and an electrode mixture may be mixed in the unit electrodes.

According to an exemplary embodiment of the present disclosure, a thickness of an electrode mixture layer applied on an outer surface of one side of the unit current collector may be in a range of 10 µm to 100 µm.

According to an exemplary embodiment of the present disclosure, a thickness of the electrode may be in a range of 50 µm to 500 µm.

According to one exemplary embodiment of the present disclosure, the unit electrodes may be mutually bonded by a binder in an electrode mixture.

According to an exemplary embodiment of the present disclosure, a general current collector may be additionally interposed between the unit electrodes.

The present disclosure provides a battery cell consisting of the electrode for a secondary battery.

According to an exemplary embodiment of the present disclosure, the electrode for a secondary battery may be prepared by a method including: (a) a process of preparing a unit current collector with a three-dimensional network structure and an electrode slurry; (b) a process of coating the unit current collector with the electrode slurry; (c) a process of drying the electrode slurry to form an electrode mixture layer; (d) a process of rolling unit electrodes; and (e) a process of laminating the unit electrodes.

According to another exemplary embodiment of the present disclosure, the electrode for a secondary battery may be prepared by a method including: (a) a process of preparing a unit current collector with a three-dimensional network structure and an electrode slurry; (b) a process of coating the unit current collector with the electrode slurry; (c) a process of drying the electrode slurry to form an electrode mixture layer; (d) a process of laminating unit electrodes; and (e) a process of rolling the laminated unit electrodes.

### Advantageous Effects

As described above, an electrode for a secondary battery according to the present disclosure has a structure in which unit electrodes having a structure in which an electrode mixture is impregnated and applied on a unit current collector with a three-dimensional network structure are laminated, and the unit electrodes are connected to each other through an electrode mixture. A structure in which the electrode mixture containing an electrode active material is moved into pores formed in the unit current collector to fill the inside of the unit current collector can alleviate an increase in an overall thickness of an electrode and shorten a physical distance between the current collector and the electrode active material. Accordingly, internal resistance due to a long moving path of lithium ions can be prevented from increasing even when a loading amount of the electrode mixture is increased, and thus a high capacity battery as compared with a case in which a general current collector having the same thickness is used can be provided.

Further, even when the loading amount of the electrode mixture is increased, the distance between the current collector and the electrode active material is short, which enables the achievement of a battery having both a high output and high capacity.

In addition, the inside of the current collector is filled with the electrode mixture containing the electrode active material, and finally, the binder is evenly dispersed in the electrode, and thus separation of the electrode active material can be prevented, resulting in improved performance and an extended lifespan of the electrode.

In addition, since conductive metal felt is used as a current collector, the electrode of a secondary battery according to the present disclosure has an advantage of being suitable for use in a flexible battery due to the flexibility of the metal felt itself.

### Brief Description of the Drawings

FIG. 1 is a perspective view schematically showing a unit current collector according to an embodiment of the present disclosure.
FIG. 2 is a perspective view schematically showing an electrode in which the unit current collectors of FIG. 1 are laminated.
FIG. 3 is an enlarged view of a part of FIG. 2 and is a perspective view showing that an electrode mixture is introduced into pores of the unit current collector.
FIG. 4 is a perspective view schematically showing a state in which the unit current collector of FIG. 1 is coated with the electrode mixture.
FIG. 5 is a vertical section taken along line A - A 'of FIG. 4.
FIG. 6 is a vertical section of an electrode in which the unit current collectors of FIG. 4 are laminated.

### Detailed Description of the Preferred Embodiments

The present disclosure relates to an electrode for a secondary battery in which two or more unit electrodes are laminated in a state of being in close contact with each other, and mutually adjacent unit electrodes are electrically connected through an electrode mixture, wherein in each of the unit electrodes, the electrode mixture containing an electrode active material is introduced into pores of a unit current collector with a three-dimensional network structure.

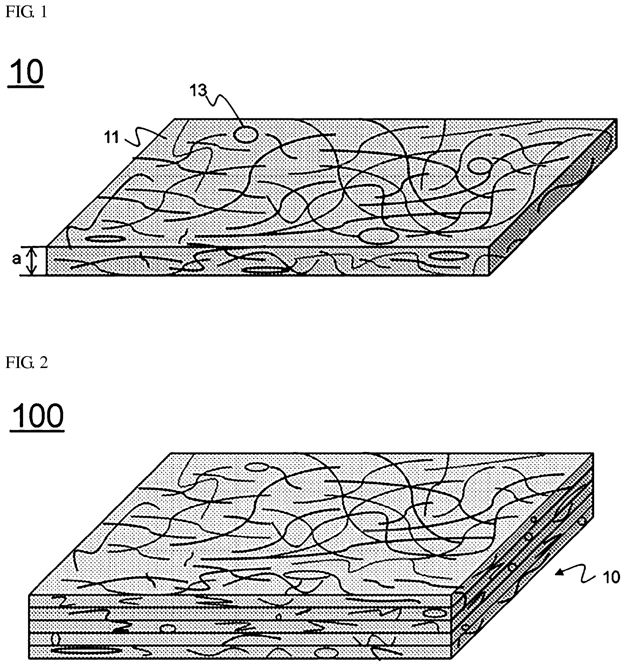

FIG. 1 is a perspective view schematically showing a unit current collector according to an embodiment of the present disclosure, and FIG. 2 is a perspective view schematically showing an electrode in which the unit current collectors of FIG. 1 are laminated.

Referring to FIGS. 1, 2, and 3, a unit electrode 10 includes a unit current collector 11 with a three-dimensional network structure having pores 13, the pores 13 are formed as open pores passing through an outer surface and the inside of the unit current collector, and an electrode mixture containing an electrode active material is permeated between the pores.

As described above, an electrode for a secondary battery of the present disclosure has a structure in which open pores are formed in a unit current collector itself, and thus when an electrode mixture is applied on the unit current collector, the electrode mixture containing an electrode active material flows into the open pores. That is, the electrode mixture containing the electrode active material is not only applied on the unit current collector but also fills the pores in a current collector. Accordingly, even when the same amount of the electrode mixture is loaded, it is possible to prevent an increase in total thickness of the electrode compared with an electrode in which a coating layer is formed only on a current collector. In addition, it is possible to prevent the internal resistance from increasing since the distance between the outermost portion of an electrode mixture layer and the surface of the current collector is not increased.

Further, the electrode mixture layer containing the electrode active material permeates into the unit current collector so that adhesion between the current collector and the electrode active material is increased, and the inside of the current collector is filled with the electrode mixture containing the electrode active material so that a binder is uniformly dispersed in the electrode. Thus, it is possible to prevent the electrode active material from being separated during repetitive charging and discharging, thereby improving the performance of the electrode, extending the lifespan thereof, and preventing an impregnation rate of an electrolyte from being reduced because a thick mixture layer is formed.

An electrode for a secondary battery according to the present disclosure has a structure in which unit electrodes are electrically connected to adjacent unit electrodes through an electrode mixture in a state in which the unit electrodes are laminated. Further, in the electrode for a secondary battery according to the present disclosure, since an increase in a thickness of the electrode is small even when the electrode mixture is applied, in order to provide a secondary battery with a high capacity, the electrode may have a structure in which 2 to 10 unit electrodes are laminated, and preferably, may have a structure in which 4 to 10 unit electrodes are laminated.

Referring to FIG. 2, an electrode 100 of the present disclosure is formed by laminating the plurality of unit electrodes 10, and thus when 2 to 10 unit current collectors having an average thickness of 30 µm to 400 µm are laminated, the total thickness of the electrodes is formed to be 50 µm to 500 µm.

In one specific example, when considering that the unit current collector has a structure in which open pores are formed, strength may be weakened, and thus the unit current collector may be formed thicker than a general current collector. An average thickness of the unit current collectors is in a range of 30 µm to 400 µm, preferably, in a range of 30 µm to 350 µm, and more preferably, in a range of 40 µm to 300 µm.

When the average thickness of the unit current collectors is less than 30 µm, the strength of the current collector is significantly lowered, which is not preferable. When the average thickness of the unit current collector is greater than 400 µm, it is difficult for the electrode mixture layer to penetrate into the current collector, which is also not preferable.

The unit current collector is made of a material having high electrical conductivity, i.e., conductive metal felt with a three-dimensional network structure. Since the electrode of the present disclosure uses conductive metal felt as a current collector, there is an advantage of being suitable for use in a flexible battery due to the flexibility of the metal felt itself.

The material having high electrical conductivity, while not being particularly limited as long as the material does not have a chemical effect by reacting with an electrode mixture, may be, for example, at least one selected from the group consisting of aluminum (Al), magnesium (Mg), iron (Fe), nickel (Ni), chromium (Cr), copper (Cu), stainless steel, or an alloy thereof, and specifically, may be varied depending on a potential of an electrode and constituent components of an electrode mixture.

An aspect ratio of metal fibers constituting the conductive metal felt may be in a range of 10 to 1,000, preferably, in a range of 10 to 500, and more preferably, in a range of 30 to 150.

Although the pores 13 may be formed in various sizes in the unit current collector 11, an average diameter of the pores 13 is in a range of 1 µm to 100 µm, preferably, in a range of 10 µm to 90 µm, and more preferably, in a range of 20 µm to 80 µm, in consideration of particle diameters of an electrode active material, a conductive agent, and a binder contained in the electrode mixture.

When the average diameter of the open pores is less than 1 µm, it is difficult for the electrode mixture having a particle size greater than 1 µm to move into the pores, and thus a particle diameter range of an applicable electrode active material may be limited, which is not preferable. When the average diameter of the open pores is greater than 100 µm, the strength of the current collector may be weakened, which is also not preferable.

Further, the open pores may have a structure in which an electrode mixture containing an electrode active material is introduced into at least a part of the open pores, and thus a process of rolling the electrode slurry after coating the unit current collector with the electrode slurry may be included to induce the electrode mixture to be introduced into the pores.

In a case in which the unit current collector with a three-dimensional network structure is coated with the electrode mixture, it is preferable that a viscosity of the electrode mixture falls within a certain range in order for the electrode mixture to be moved and introduced into the pores of the unit current collector, for example, the viscosity of the electrode mixture may be selected within a range of 2,000 cP or more to 12,000 cP or less in consideration of a size of the open pores formed in the current collector and a coating method .

Specifically, when a coating method that includes a method of applying pressure is used, an electrode mixture having a high viscosity may be used, but when a coating method that does not include a process of applying pressure is used, an electrode mixture having a low viscosity is preferably used.

Meanwhile, when the unit current collector is coated with the electrode mixture, an excessive electrode mixture which is not introduced into the open pores formed in the current collector may form a coating layer while being applied on one surface or both surfaces of the unit current collector.

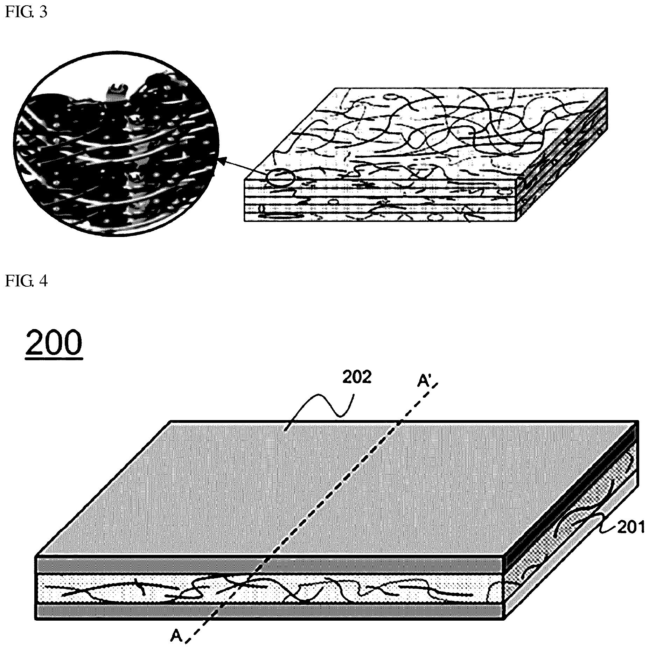

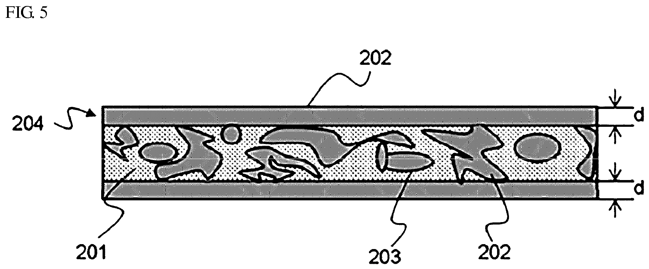

FIG. 4 is a perspective view schematically showing a state in which the unit current collector of FIG. 1 is coated with the electrode mixture, and FIG. 5 is a vertical section taken along line A - A 'of FIG. 4.

Referring to FIGS. 4 and 5, since a unit current collector 201 is coated with an electrode mixture 202, the viscosity of the electrode mixture may be selected within a range of 2,000 cP to 12,000 cP according to the coating method, and the electrode mixture 202 is introduced into at least a part of pores 203. Further, when a coating amount of the electrode mixture is greater than an amount that can be introduced into the open pores formed in the current collector, the excessive electrode mixture which is not introduced into the pores forms an electrode mixture layer 204 on the outer surface of the current collector. When the unit electrodes formed with an outer surface of one side of the unit current collector coated with the electrode mixture layer are rolled, the electrode mixture layer may be uniformly formed with a thickness d.

A thickness of the electrode mixture layer applied on the outer surface of one side of the unit current collector may be in a range of 10 µm to 100 µm, and preferably, in a range of 10 µm to 80 µm. When the thickness of the electrode mixture layer applied on the outer surface of one side of the unit current collector is less than 10 µm, a bonding force between adjacent unit electrodes may be weakened, which is not preferable. When the electrode mixture layer is thicker than 100 µm, a problem that an impregnation rate of an electrolyte is lowered or the mobility of lithium ions is lowered may occur, which is also not preferable.

As described above, a plurality of unit electrodes formed by applying the electrode mixture on the electrode current collector in which the open pores are formed are laminated to form an electrode. Here, a thickness of the electrode may be freely set to have a desired capacity in consideration of the thickness of the electrode current collector or the thickness of the electrode mixture layer applied on the outer surface of the current collector, and may be in a range of 50 µm to 500 µm, preferably, in a range of 100 µm to 500 µm, and more preferably, in a range of 200 µm to 450 µm.

When the thickness of the electrode is less than 50 µm, it is difficult to achieve the purpose of providing a high capacity battery, which is not preferable. When the thickness of the electrode is greater than 500 µm, as the number of laminated unit electrodes increases, the electrode may be tilted or pushed to one side at the time of rolling after laminating or using a secondary battery, which is also not preferable.

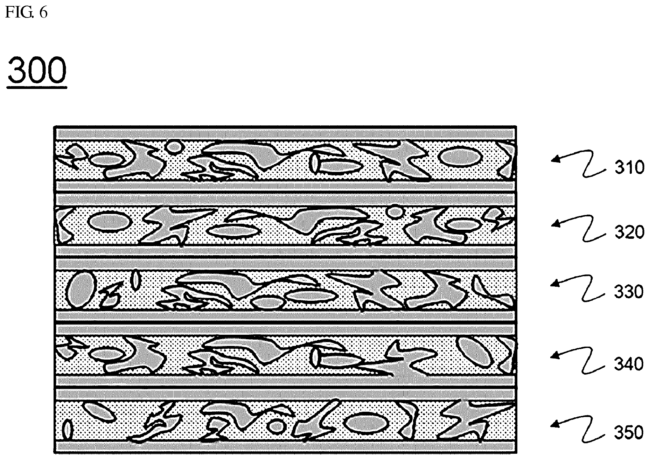

Referring to FIG. 6, the electrode 300 is formed by laminating five unit electrodes 310, 320, 330, 340, and 350 in a state of being in close contact with each other, and the unit electrodes adjacent to each other in a laminated state are electrically connected through the electrode mixture.

The unit electrodes may be bonded to each other by a binder in the electrode mixture in order to prevent a phenomenon in which the unit electrodes push against each other in the laminated state, and a bonding force between the electrode mixture and the unit current collector may be increased due to the presence of the binder.

In order to prevent a phenomenon in which electrical conductivity is lowered in a state in which individually prepared unit electrodes are laminated, a general current collector having no porous structure may be interposed between laminated unit electrodes in various shapes. Here, at least one of the general current collectors may be interposed in one electrode, for the general current collector, for example, an aluminum current collector may be used for as a positive electrode, and a copper foil current collector may be used as a negative electrode.

In the electrode 300 according to the present disclosure, the unit electrode may be rolled to reduce a thickness of the unit electrode by introducing the electrode mixture into the pores in the current collector, and in this case, a method in which an individual unit electrode is rolled and then laminated may be used, or the unit electrodes may be rolled in a state in which the unit electrode is laminated without individually rolling the unit electrode.

The present disclosure provides a battery cell having a structure in which at least one of positive and negative electrodes made of the above-described electrode for a secondary battery and an electrolyte are assembled in a cell case, and since the electrolyte may be introduced into open pores of an unit current collector in the electrode for a secondary battery, an electrode mixture introduced into the open pores of the unit current collector may be impregnated into the electrolyte, thereby preventing a capacity from being reduced.

The present disclosure also provides a method of preparing an electrode for a secondary battery, including:
(a) a process of preparing a unit current collector with a three-dimensional network structure and an electrode slurry;
(b) a process of coating the unit current collector with the electrode slurry;
(c) a process of drying the electrode slurry to form an electrode mixture layer;
(d) a process of rolling unit electrodes; and
(e) a process of laminating the unit electrodes.

As described above, in the electrode for a secondary battery, since the unit current collector having a porous structure is coated with the electrode slurry, the electrode slurry moves into the pores in the unit current collector and thus the inside of the unit current collector may be filled with the electrode slurry. Since the electrode slurry is dried and the unit electrodes are rolled in a state in which the unit current collector is filled with the electrode slurry as described above, the unit electrodes may be formed with a uniform thickness.

The present disclosure also provides a method of preparing an electrode for a secondary battery, including:
(a) a process of preparing a unit current collector with a three-dimensional network structure and an electrode slurry;
(b) a process of coating the unit current collector with the electrode slurry;
(c) a process of drying the electrode slurry to form an electrode mixture layer;
(d) a process of laminating unit electrodes; and
(e) a process of rolling the laminated unit electrodes.

As described above, in the electrode for a secondary battery, since the unit current collector having a porous structure is coated with the electrode slurry, the electrode slurry moves into the pores in the unit current collector and thus the inside of the unit current collector may be filled with the electrode slurry. The electrode slurry is dried in a state in which the unit current collector is filled with the electrode slurry, and the unit electrodes in which the electrode mixture layer is formed are laminated, then the laminated unit electrodes are rolled.

In this way, a process of rolling individual unit electrodes is omitted, and rolling is performed on the laminated unit electrodes, and thus the efficiency of a preparing process may be improved.

The present disclosure also provides a lithium secondary battery including the electrode.

The lithium secondary battery may consist of a positive electrode, a negative electrode, a separator, and a non-aqueous electrolyte containing a lithium salt, and be prepared by inserting a porous separator between the positive electrode and the negative electrode and introducing the electrolyte, which is a conventional method known in the art.

The electrode according to the present disclosure may be at least one selected from the positive electrode and the negative electrode. That is, both the positive electrode and the negative electrode may have a structure of the electrode according to the present disclosure, or only one of the positive electrode and the negative electrode may have the structure of the electrode according to the present disclosure, and the present disclosure is not particularly limited thereto and may be appropriately selected as necessary.

Specifically, the positive electrode, for example, may be prepared by coating a unit current collector with a three-dimensional network structure of the present disclosure with a mixture slurry of a positive electrode active material, a conductive material and a binder, and then drying the mixture, a filler may be further added to the mixture as necessary.

Examples of the positive electrode active material may include, for example, a layered compound of lithium cobalt oxide (LiCoO₂), lithium nickel oxide (LiNiO₂), etc. or a substituted compound with one or more transition metals; lithium manganese oxide such as Li₁+xMn₂-xO₄ (in which x is 0 to 0.33), LiMnO₃, LiMn₂O₃, LiMnO₂, etc.; lithium copper oxide (Li₂CuO₂); vanadium oxide such as LiV₃O₈, LiFe₃O₄, V₂O₅, CuZV₂O₇, etc.; Ni site-type lithium nickel oxide represented by Chemical Formula of LiNi₁-xMxO₂ (in which, M=Co, Mn, Al, Cu, Fe, Mg, B or Ga, x=0.01 to 0.3); lithium manganese complex oxide represented by Chemical Formula LiMn₂-xMxO₂ (in which M=Co, Ni, Fe, Cr, Zn or Ta, and x=0.01 to 0.1) or Li₂Mn₃MO₈ (in which, M=Fe, Co, Ni, Cu or Zn); spinel-structured lithium manganese composite oxide represented by LiNixMn₂-xO₄; LiMn₂O₄ in which a portion of Li is substituted with alkaline earth metal ions; a disulfide compound; Fe₂ (MoO₄)₃, and the like. However, the present disclosure may not be limited thereof.

The conductive agent is generally added so that the conductive agent has 1 to 30 wt% based on the total weight of the slurry including the positive electrode active material. The conductive agent is not particularly restricted so long as the conductive agent exhibits high conductivity while the conductive agent does not induce any chemical change in a battery to which the conductive agent is applied. For example, graphite, such as natural graphite or artificial graphite; carbon black, such as carbon black, acetylene black, Ketjen black, channel black, furnace black, lamp black, thermal black; conductive fiber, such as carbon fiber or metallic fiber; metallic powder, such as carbon fluoride powder, aluminum powder, or nickel powder; conductive whisker, such as zinc oxide or potassium titanate; conductive metal oxide, such as titanium oxide; or polyphenylene derivatives may be used as the conductive agent.

The binder is a component assisting in binding between the active material and conductive agent and in binding with the current collector. The binder is generally added in an amount of 1 to 30 wt% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrollidone, tetrafluoroethylene, polyethylene, polypropylene, ethylene-propylene-diene terpolymer (EPDM), sulfonated EPDM, styrene butadiene rubber, fluoro rubber, and various copolymers.

The filler is an optional component used to inhibit expansion of the positive electrode. There is no particular limit to the filler so long as the filler does not cause chemical changes in a battery to which the filler is applied, and is made of a fibrous material. As examples of the filler, there may be used olefin polymers, such as polyethylene and polypropylene; and fibrous materials, such as glass fiber and carbon fiber.

Specifically, the negative electrode, for example, may be prepared by coating a unit current collector with a three-dimensional network structure of the present disclosure with a mixture slurry of a negative electrode active material, a conductive material and a binder, and then drying the mixture, a filler may be further added to the mixture, as necessary.

As the negative electrode active material, for example, there may be used carbon, such as non-graphitizing carbon or a graphite-based carbon; a metal composite oxide, such as LiₓFe₂O₃ (0 ≦ x ≦ 1), LiₓWO₂ (0 ≦ x ≦ 1), SnₓMe₁₋ₓMe'_{y}O_{z} (Me: Mn, Fe, Pb, Ge; Me': Al, B, P, Si, Group 1, 2 and 3 elements of the periodic table, halogen; 0 ≦ x ≦ 1; 1 ≦ y ≦ 3; 1 ≦ z ≦ 8); lithium metal; lithium alloy; silicon-based alloy; tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; conductive polymer, such as polyacetylene; or a Li-Co-Ni based material; titanium oxide; lithium titanium oxide, etc.

When the electrode according to the present disclosure is a positive electrode and contains a lithium transition metal oxide generally used as a positive electrode active material, the positive electrode may have a loading amount up to 700 mg/25 cm² or more. When the electrode according to the present disclosure is a negative electrode and contains a carbon material generally used as a negative electrode active material, the negative electrode may have a loading amount up to 300 mg/25 cm² or more.

Other components of the secondary battery according to the present disclosure will be described below.

The separator is disposed between the positive electrode and the negative electrode. As the separator, for example, an insulative thin film exhibiting high ion permeability and high mechanical strength may be used. The separator generally has a pore diameter of 0.01 to 10 µm and a thickness of 5 to 300 µm. As the material for the separator, for example, a sheet or non-woven fabric made of olefin polymer, such as polypropylene, which exhibits chemical resistance and hydrophobicity, glass fiber, or polyethylene is used. In a case in which a solid electrolyte, such as polymer, is used as an electrolyte, the solid electrolyte may function as the separator.

The non-aqueous electrolyte containing a lithium salt may be composed of a non-aqueous electrolyte and a lithium salt. As the non-aqueous electrolyte, a non-aqueous organic solvent, an organic solid electrolyte or an inorganic solid electrolyte may be used, but not limited thereto.

As examples of the non-aqueous organic solvent, mention may be made of non-protic organic solvents, such as N-methyl-2-pyrollidinone, propylene carbonate, ethylene carbonate, butylene carbonate, dimethyl carbonate, diethyl carbonate, gamma-butyro lactone, 1,2-dimethoxy ethane, tetrahydroxy Franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

As examples of the organic solid electrolyte, mention may be made of polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

As examples of the inorganic solid electrolyte, mention may be made of nitrides, halides, and sulphates of lithium (Li), such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

The lithium salt is a material that is readily soluble in the above-mentioned non-aqueous electrolyte, and may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate, and imide.

In addition, in order to improve charge and discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like may be added to the electrolytic solution. According to circumstances, in order to impart incombustibility, the non-aqueous electrolytic solution may further include halogen-containing solvents, such as carbon tetrachloride and ethylene trifluoride. Furthermore, in order to improve high-temperature storage characteristics, the non-aqueous electrolytic solution may further include carbon dioxide gas, and may further include fluoro-ethylene carbonate(FEC), propene sultone(PRS), etc.

In one specific example, a lithium salt such as LiPF₆, LiClO₄, LiBF₄, or LiN(SO₂CF₃)₂ is added to a mixed solvent of a cyclic carbonate such as ethylene carbonate (EC) or propylene carbonate (PC) which is a high-dielectric solvent and a linear carbonate such as diethyl carbonate (DEC), dimethyl carbonate (DMC) or ethylmethyl carbonate (EMC) which is a low-viscosity solvent to prepare a non-aqueous electrolyte containing a lithium salt.

The present disclosure also provides a secondary battery in which an electrode assembly made of the electrode for a secondary battery is sealed inside a battery case together with an electrolyte. Here, the secondary battery may be used for a battery cell which is being used as a power source of a small device. The secondary battery may also preferably be used as a unit cell in a battery pack, which include a plurality of battery cells, used as a power source of a middle- or large-sized device in which high temperature stability, long cycle characteristics, high rate characteristics, and the like are required and in a device including the battery pack as a power source.

The device may be any one selected from a mobile electronics, a power tool powered by battery-based motors; an electric vehicle including an electric vehicle(EV), a hybrid electric vehicle(HEV), a plug-in hybrid electric vehicle(PHEV), etc.; an electric motorcycle including an electric bike(E-bike) and electric scooter(E-scooter); an electric golf cart; power storage systems, but is not limited thereto.

Since the above-described devices or apparatus are well known in the art, a detailed description thereof will be omitted herein.

Hereinafter, the present disclosure will be described with reference to Examples, but the following Examples are intended to illustrate the present disclosure and the scope of the present disclosure is not limited thereto.

### <Example 1>

### Preparation of Positive Electrode

LiNi_{0.55}Mn_{0.30}Co_{0.15}O₂ as a positive electrode active material, Denka black as a conductive material, and polyvinylidene fluoride as a binder were mixed at a weight ratio of 96:2:2, and N-methyl pyrrolidone (NMP) was added to the mixture to prepare a slurry.

The slurry was applied on aluminum felt having an average pore diameter of 20 µm, an aspect ratio of 100, and a thickness of 40 µm to obtain a unit positive electrode. The unit positive electrode was dried in a vacuum oven at 120 °C, and then two dried unit positive electrodes were laminated and rolled to prepare a positive electrode. Here, a thickness of an electrode including a current collector was 75 µm.

### Preparation of Lithium Secondary Battery

Lithium metal (40 µm) was attached to a copper (Cu) foil as a counter electrode and used, and a polyolefin separator was interposed between the positive electrode and the counter electrode, and then an electrolyte in which 1M lithium hexafluorophosphate (LiPF₆) was dissolved in a solvent in which ethylene carbonate (EC) and ethyl methyl carbonate (DEC) were mixed at a volume ratio of 50:50 was injected to prepare a pouch type half-cell.

### <Examples 2 to 4 >

A lithium secondary battery was prepared in the same manner as in Example 1, except that an average diameter of the pores of the current collector was changed as shown in Table 1.

### <Example 5>

A lithium secondary battery was prepared in the same manner as in Example 1, except that a thickness of the aluminum felt was changed to 55 µm, and a thickness of the electrode including the current collector was adjusted to 102 µm.

### <Examples 6 to 8 >

A lithium secondary battery was prepared in the same manner as in Example 5, except that an average diameter of the pores of the current collector was changed as shown in Table 1.

### <Comparative Example 1>

### Preparation of Positive Electrode

LiNi_{0.55}Mn_{0.30}Co_{0.15}O₂ as a positive electrode active material, Denka black as a conductive material, and polyvinylidene fluoride as a binder were mixed at a weight ratio of 96:2:2, and N-methyl pyrrolidone (NMP) was added to the mixture to prepare a slurry. The positive electrode slurry was applied in three layers between two pieces of aluminum and on outer surfaces thereof, followed by drying in a vacuum oven at 120 °C to prepare a positive electrode. Here, a thickness of the electrode including the thickness of the current collector was 75 µm, and a thickness of the current collector was 12 µm.

### Preparation of Lithium Secondary Battery

Lithium metal (40 µm) was attached to a copper (Cu) foil as a counter electrode and used, and a polyolefin separator was interposed between the positive electrode and the counter electrode, and then an electrolyte in which 1M lithium hexafluorophosphate (LiPF₆) was dissolved in a solvent in which ethylene carbonate (EC) and ethyl methyl carbonate (DEC) were mixed at a volume ratio of 50:50 was injected to prepare a pouch type half-cell.

### <Comparative Example 2>

A lithium secondary battery was prepared in the same manner as in Comparative Example 1, except that a thickness of the electrode including the current collector was changed as shown in Table 1.

### <Experimental Example > Evaluation of Lifespan Characteristics

In order to evaluate lifespan characteristics of the electrode according to the present disclosure, the following experiment was carried out.

The experiment was carried out under the condition of 1/3 C ↔ 1/3 C (one charge / discharge) between 4.2 V to 2.5 V for the batteries prepared in Examples and Comparative Examples. The lifespan characteristics were evaluated from a discharge capacity retention rate, and the discharge capacity retention rate was expressed as a percentage ratio of a capacity after repeating charging and discharging 200 times to an initial capacity. The result is shown in Table 1.

**[Table 1]**

| | Average Diameter of Pores of Current Collector (µm) | | Thickness of Electrode including Current Collector (µm) | | Lifespan Characteristics | | | | |
|---|---|---|---|---|---|---|---|---|---|
| | | | | | Initial Discharge Capacity (mAh/cm²) | Capacity After 200 cycles (mAh/cm²) | | Discharge Capacity Retention Rate at 200 Times (%) | |
| Example 1 | | 20 | | 75 | 3.431 | | 3.163 | | 92.2 |
| Example 2 | | 30 | | 75 | 3.864 | | 3.578 | | 92.6 |
| Example 3 | | 50 | | 75 | 3.715 | | 3.444 | | 92.7 |
| Example 4 | | 80 | | 75 | 3.449 | | 3.197 | | 92.7 |
| Example 5 | | 20 | | 102 | 3.313 | | 2.932 | | 88.5 |
| Example 6 | | 30 | | 102 | 3.753 | | 3.318 | | 88.4 |
| Example 7 | | 50 | | 102 | 3.623 | | 3.224 | | 89.0 |
| Example 8 | | 80 | | 102 | 3.330 | | 2.957 | | 88.8 |
| Comparative Example 1 | | - | | 75 | 3.643 | | 3.356 | | 92.1 |
| Comparative Example 2 | | - | | 102 | 3.446 | | 2.939 | | 85.3 |

Referring to Table 1, it can be confirmed that the batteries of Examples 1 to 4 have similar or better lifespan characteristics than the battery of Comparative Example 1, even though the thickness of the electrode was the same in Examples 1 to 4 and Comparative Example 1.

In addition, the phenomenon that makes such a difference becomes clearer in high loading. In Examples 5 to 8 and Comparative Example 2, the electrodes are high loading electrodes having the same electrode thickness. Here, it was confirmed that the lifespan characteristics in Examples 5 to 8 were better than those of Comparative Example 2 while the lifespan characteristics of the electrode were significantly lowered in Comparative Example 2.

This is because not only because a physical distance between the electrode current collector and the active material of the electrode of the present disclosure is decreased as compared with the electrode of Comparative Example, a reaction distance is shortened, thereby decreasing resistance in the electrode, but also a three-dimensional network structure serves as a support for supporting the active material layer, thereby reducing the possibility of separation of the active material layer and the current collector in the electrode.

It should be understood by those skilled in the art that various changes may be made without departing from the scope of the present claims.

## Claims

1. An electrode (100) for a secondary battery in which
two or more unit electrodes (10; 201) are laminated in a state of being in close contact with each other, and
mutually adjacent unit electrodes (10, 201) are electrically connected through an electrode mixture (202),
wherein in each of the unit electrodes, the electrode mixture (202) containing an electrode active material is introduced into pores (203) of a unit current collector (11) with a three-dimensional network structure,
the unit current collector (11) with a three-dimensional network structure is conductive metal felt,
an average thickness of the unit current collector (11) with a three-dimensional network structure is in a range of 30 µm to 400 µm, and
an average diameter of pores (203) in the unit current collector (11) with a three-dimensional network structure is in a range of 1 µm to 100 µm.

2. The electrode (100) of claim 1, wherein the electrode has a structure in which 2 to 10 unit electrodes are laminated.

3. The electrode (100) of claim 1, wherein a unit current collector (11) with a three-dimensional network structure and an electrode mixture are mixed in the unit electrodes.

4. The electrode (100) of claim 1, wherein a thickness of an electrode mixture layer applied on an outer surface of one side of the unit current collector (11) is in a range of 10 µm to 100 µm.

5. The electrode (100) of claim 1, wherein a thickness of the electrode is in a range of 50 µm to 500 µm.

6. The electrode of claim 1, wherein the unit electrodes are mutually bonded by a binder in an electrode mixture.

7. A battery cell consisting of the electrode (100) for a secondary battery, wherein a positive electrode, a negative electrode and an electrolytic solution are built in a cell case and at least one of the positive electrode and the negative electrode is prepared according to any one of claims 1 to 6.

8. The battery cell of claim 7, wherein the electrolyte is introduced into open pores of an unit current collector (11) in the electrode (100) for a secondary battery.

9. A method of preparing an electrode for a secondary battery according to any one of claim 1 to 6 comprising:
(a) a process of preparing a unit current collector (11) with a three-dimensional network structure and an electrode slurry;
(b) a process of coating the unit current collector (11) with the electrode slurry;
(c) a process of drying the electrode slurry to form an electrode mixture layer;
(d) a process of rolling unit electrodes (10; 201); and
(e) a process of laminating the unit electrodes (10; 201).

10. A method of preparing an electrode (100) for a secondary battery according to any one of claims 1 to 6 comprising:
(a) a process of preparing a unit current collector (11) with a three-dimensional network structure and an electrode slurry;
(b) a process of coating the unit current collector (11) with the electrode slurry;
(c) a process of drying the electrode slurry to form an electrode mixture layer;
(d) a process of laminating unit electrodes (10; 201); and
(e) a process of rolling the laminated unit electrodes (10; 201).

## Patentansprüche

1. Elektrode (100) für eine Sekundärbatterie, in welcher
zwei oder mehrere Einheitselektroden (10; 201) in einem Zustand eines nahen Kontakts miteinander laminiert sind; und
wechselseitig benachbarte Einheitselektroden (10, 201) durch eine Elektrodenmischung (202) elektrisch verbunden sind,
wobei, in jeder der Einheitsektroden, die Elektrodenmischung (202), welche ein Elektrodenaktivmaterial beinhaltet, in Poren (203) eines Einheits-Stromkollektors (11) mit einer dreidimensionalen Netzwerkstruktur eingeführt ist,
der Einheits-Stromkollektor (11) mit einer dreidimensionalen Netzwerkstruktur ein leitfähiger Metallfilz ist,
eine Durchschnittsdicke des Einheits-Stromkollektors (11) mit einer dreidimensionalen Netzwerkstruktur in einem Bereich von 30 µm bis 400 µm ist, und
ein Durchschnittsdurchmesser von Poren (203) in dem Einheits-Stromkollektor (11) mit einer dreidimensionalen Netzwerkstruktur in einem Bereich von 1 µm bis 100 µm ist.

2. Elektrode (100) nach Anspruch 1, wobei die Elektrode eine Struktur aufweist, in welcher 2 bis 10 Einheitselektroden laminiert sind.

3. Elektrode (100) nach Anspruch 1, wobei ein Einheits-Stromkollektor (11) mit einer dreidimensionalen Netzwerkstruktur und eine Elektrodenmischung in den Einheitselektroden gemischt sind.

4. Elektrode (100) nach Anspruch 1, wobei eine Dicke einer Elektrodenmischungsschicht, welche an einer äußeren Fläche einer Seite des Einheits-Stromkollektors (11) angebracht ist, in einem Bereich von 10 µm bis 100 µm ist.

5. Elektrode (100) nach Anspruch 1, wobei eine Dicke der Elektrode in einem Bereich von 50 µm bis 500 µm ist.

6. Elektrode nach Anspruch 1, wobei die Einheitselektroden durch ein Bindemittel in einer Elektrodenmischung wechselseitig verbunden sind.

7. Batteriezelle, welche aus der Elektrode (100) für eine Sekundärbatterie besteht, wobei eine positive Elektrode, eine negative Elektrode und eine elektrolytische Lösung in einem Zellengehäuse eingebaut sind und wenigstens eine von der positiven Elektrode und der negativen Elektrode nach einem der Ansprüche 1 bis 6 vorbereitet ist.

8. Batteriezelle nach Anspruch 7, wobei der Elektrolyt in offene Poren eines Einheits-Stromkollektors (11) in der Elektrode (100) für eine Sekundärbatterie eingeführt ist.

9. Verfahren zum Vorbereiten einer Elektrode für eine Sekundärbatterie nach einem der Ansprüche 1 bis 6, umfassend:
(a) einen Prozess eines Vorbereitens eines Einheits-Stromkollektors (11) mit einer dreidimensionalen Netzwerkstruktur und einer Elektrodensuspension;
(b) einen Prozess eines Bedeckens des Einheits-Stromkollektors (11) mit der Elektrodensuspension;
(c) einen Prozess eines Trocknens der Elektrodensuspension, um eine Elektrodenmischungsschicht zu bilden;
(d) einen Prozess eines Rollens von Einheitselektroden (10; 201); und
(e) einen Prozess eines Laminierens der Einheitselektroden (10; 201).

10. Verfahren zum Vorbereiten einer Elektrode (100) für eine Sekundärbatterie nach einem der Ansprüche 1 bis 6, umfassend:
(a) einen Prozess eines Vorbereitens eines Einheits-Stromkollektors (11) mit einer dreidimensionalen Netzwerkstruktur und einer Elektrodensuspension;
(b) einen Prozess eines Bedeckens des Einheits-Stromkollektors (11) mit der Elektrodensuspension;
(c) einen Prozess eines Trocknens der Elektrodensuspension, um eine Elektrodenmischungsschicht zu bilden;
(d) einen Prozess eines Laminierens von Einheitselektroden (10; 201); und
(e) einen Prozess eines Rollens der laminierten Einheitselektroden (10; 201).

## Revendications

1. Électrode (100) pour une batterie secondaire dans laquelle
deux électrodes unitaires (10 ; 201) ou plus sont stratifiées dans un état de contact étroit les unes avec les autres, et
les électrodes unitaires (10, 201) mutuellement adjacentes sont électriquement connectées par un mélange d'électrode (202),
dans laquelle, dans chacune des électrodes unitaires, le mélange d'électrode (202) contenant un matériau actif d'électrode est introduit dans des pores (203) d'un collecteur de courant unitaire (11) avec une structure en réseau tridimensionnel,
le collecteur de courant unitaire (11) avec une structure en réseau tridimensionnel est un feutre métallique conducteur,
une épaisseur moyenne du collecteur de courant unitaire (11) avec une structure en réseau tridimensionnel est dans une plage de 30 µm à 400 µm, et
un diamètre moyen de pores (203) dans le collecteur de courant unitaire (11) avec une structure en réseau tridimensionnel est dans une plage de 1 µm à 100 µm.

2. Électrode (100) selon la revendication 1, dans laquelle l'électrode présente une structure dans laquelle 2 à 10 électrodes unitaires sont stratifiées.

3. Électrode (100) selon la revendication 1, dans laquelle un collecteur de courant unitaire (11) avec une structure en réseau tridimensionnel et un mélange d'électrode sont mélangés dans les électrodes unitaires.

4. Électrode (100) selon la revendication 1, dans laquelle une épaisseur d'une couche de mélange d'électrode appliquée sur une surface externe d'un côté du collecteur de courant unitaire (11) est dans une plage de 10 µm à 100 µm.

5. Électrode (100) selon la revendication 1, dans laquelle une épaisseur de l'électrode est dans une plage de 50 µm à 500 µm.

6. Électrode selon la revendication 1, dans laquelle les électrodes unitaires sont mutuellement liées par un liant dans un mélange d'électrode.

7. Cellule de batterie consistant en l'électrode (100) pour une batterie secondaire, dans laquelle une électrode positive, une électrode négative et une solution électrolytique sont intégrées dans un boîtier de cellule et au moins l'une de l'électrode positive et de l'électrode négative est préparée selon l'une quelconque des revendications 1 à 6.

8. Cellule de batterie selon la revendication 7, dans laquelle l'électrolyte est introduit dans des pores ouverts d'un collecteur de courant unitaire (11) dans l'électrode (100) pour une batterie secondaire.

9. Procédé de préparation d'une électrode pour une batterie secondaire selon l'une quelconque des revendications 1 à 6 comprenant :
(a) un processus de préparation d'un collecteur de courant unitaire (11) avec une structure en réseau tridimensionnel et une suspension d'électrode ;
(b) un processus d'application par revêtement de la suspension d'électrode sur le collecteur de courant unitaire (11) ;
(c) un processus de séchage de la suspension d'électrode pour former une couche de mélange d'électrode ;
(d) un processus de laminage d'électrodes unitaires (10 ; 201) ; et
(e) un processus de stratification des électrodes unitaires (10 ; 201).

10. Procédé de préparation d'une électrode (100) pour une batterie secondaire selon l'une quelconque des revendications 1 à 6 comprenant :
(a) un processus de préparation d'un collecteur de courant unitaire (11) avec une structure en réseau tridimensionnel et une suspension d'électrode ;
(b) un processus d'application par revêtement de la suspension d'électrode sur le collecteur de courant unitaire (11),
(c) un processus de séchage de la suspension d'électrode pour former une couche de mélange d'électrode ;
(d) un processus de stratification d'électrodes unitaires (10 ; 201) ; et
(e) un processus de laminage des électrodes unitaires (10 ; 201) stratifiées.
